# EUROPEAN PATENT APPLICATION

(11) **EP 4 741 727 A1**
(43) Date of publication of application: **13.05.2026**
(21) Application number: 25214807.7
(22) Date of filing: 11.11.2025
(51) Int. Cl.: F24F 13/20

(54) **AIR CONDITIONER AND METHOD OF MANUFACTURING MIRROR ATTACHABLE TO AIR CONDITIONER**

(30) Priority: 11.11.2024 KR 20240159344
(71) Applicant: LG Electronics Inc., Yeongdeungpo-gu Seoul 07336 (KR)
(72) Inventor: CHOI, Sunggyu, Seoul (KR); KIM, Youngwoo, Seoul (KR); KIM, Jinho, Seoul (KR); SONG, Seungyong, Seoul (KR)
(74) Representative: Ter Meer Steinmeister & Partner

(57) **Abstract**

Disclosed are an air conditioner and a method of manufacturing a mirror attachable to the air conditioner. The air conditioner includes a case including a front wall and having a suction port and a discharge port formed therein, a mirror disposed in front of the front wall, a display device disposed behind the mirror, and a radar sensor disposed behind the mirror. The mirror includes a glass panel, a first layer formed on the rear surface of the glass panel and containing tin, and a second layer formed on the rear surface of the first layer in an area other than an area corresponding to the display device and an area corresponding to the radar sensor, thereby ensuring smooth operation of the display device and the radar sensor disposed behind the mirror.

## Description

This application claims the priority benefit of Korean Patent Application No. 10-2024-0159344, filed on November 11, 2024 in the Korean Intellectual Property Office.

### BACKGROUND OF THE INVENTION

### Field of the invention

The present disclosure relates to an air conditioner and a method of manufacturing a mirror attachable to the air conditioner, and more particularly to an air conditioner to which a mirror is attached and a method of manufacturing the mirror.

### Description of the Related Art

An air conditioner is a device that regulates the temperature of air in an indoor space to a temperature set by a user. In order to cool or heat air in the indoor space, the air conditioner may supply heat-exchanged air to the indoor space.

Various new functions related to operation of an air conditioner have recently been developed, and thus concepts such as smart air conditioners or intelligent air conditioners are gaining attention.

The air conditioner disclosed in Korean Patent Laid-Open Publication No. 10-2018-0138270 includes a radar sensor that measures the heart rate of a user present within a certain distance from the air conditioner.

In the above conventional air conditioner, the radar sensor is exposed from an external panel of the air conditioner. Because the radar sensor senses the user using electromagnetic waves, if the radar sensor is not exposed outside the panel, it is difficult to measure the signals of the user.

However, because the radar sensor is exposed outside, the radar sensor may be contaminated due to dust, foreign substances, etc., and the accuracy thereof may deteriorate. This arrangement of the radar sensor may degrade the aesthetics of the air conditioner and may lead to inconvenience in using the air conditioner.

In addition, if a display indicating information about the operation of the air conditioner is disposed on the front surface of the air conditioner, it is difficult to attach a mirror in front of the display.

### SUMMARY OF THE INVENTION

It is an object of the present disclosure to solve the above and other problems.

Another object of the present disclosure may be to provide an air conditioner in which a radar sensor and a display device operate smoothly, with a mirror attached to a front side of a case.

Another object of the present disclosure may be to provide an air conditioner provided with a mirror in which there is no difference in reflectivity between an area corresponding to the display device and the other areas.

Another object of the present disclosure may be to provide an air conditioner capable of making the rear side of a mirror invisible except for a display or a signal transmitting/receiving sensor disposed in the air conditioner, thereby improving the aesthetics of the air conditioner.

Still another object of the present disclosure is to provide a method of manufacturing a mirror attachable to the air conditioner capable of accomplishing the above objects.

The objects of the present disclosure are not limited to the objects mentioned above, and other objects not mentioned herein will be clearly understood by those skilled in the art from the following description. One or more of the objects of the present technique are achieved by the invention defined by the features of the independent claim(s).

According to an aspect of the present disclosure, an air conditioner is presented. The air conditioner includes a case including a front wall and having a suction port and a discharge port formed therein, a mirror disposed in front of the front wall, a display device disposed behind the mirror, and a radar sensor disposed behind the mirror, wherein the mirror includes a glass panel, a first layer formed on a rear surface of the glass panel and including or comprising or containing silvering for example a layer formed of tin, and a second layer formed on a rear surface of the first layer in an area other than an area corresponding to the display device and/or an area corresponding to the radar sensor to conceal a rear side of the glass panel.

According to another aspect of the present disclosure, an air conditioner is presented. The air conditioner comprises a case including a front wall, the case having a suction port and a discharge port formed therein; a display device and a radar sensor disposed at the front wall, and a mirror disposed in front of the front wall and in front of the display device and the radar sensor. The mirror comprises: a glass panel, and a first layer formed on a rear surface of the glass panel, and in front of display device and the radar sensor, and optionally also in front of the front wall portion around the display device and/or the radar sensor. The first layer is a silvering layer or reflective layer, preferably formed of tin. The first layer is configured to at least partially allow an emission or emissions (e.g. a light/radiation/signal) from the display device and/or the radar sensor to pass therethrough to an outside, and a radiation or signal reflected at an outside of the air conditioner to be transmitted therethrough from the outside towards the front wall of the case and/or towards the display device and/or towards the radar sensor. The mirror also includes a second layer formed on a rear surface of the first layer, wherein the second layer comprises an opening formed therein and corresponding to the radar sensor and/or the display device. The second layer may be less transmissive to or may block the emission(s) (i.e. the light/radiation/signal) from the display device and/or the radar sensor and/or reflected at the outside than the second layer. Optionally, the second layer may be opaque. The emission(s) (i.e. light/radiation/signal) from the display device and/or the radar sensor may pass through the opening of the second layer and then may be transmitted through the first layer and then the glass panel to the outside of the air conditioner. Similarly, radiation or signal reflected (for example originating at the radar sensor) at an outside of the air conditioner is transmitted through the glass panel and then through the first layer, and then through the opening of the second layer and into the front wall of the case and/or into the display device and/or into the radar sensor.

The air conditioner according to any one of the above aspects may include one or more of all of the following.

The front wall may have an opening formed therein. The display device and/or the radar sensor may be disposed in the opening.

The mirror may include a third layer or a translucent third layer or a third layer which is translucent formed on the rear surface of the first layer in the area corresponding to the display device.

The mirror may include a fourth layer formed behind the first layer, in an area in which the second layer is not formed, to protect the display device and/or the radar sensor.

The fourth layer may be transparent.

The mirror may include a synthetic resin film formed on a rear surface of the second layer.

The mirror may include a fifth layer formed between the glass panel and the first layer.

An adhesive material may be disposed between the front wall and the mirror.

The tin contained in the first layer may have a purity of 99.99% or higher. The fist layer may have a light transmittance of 14% to 18%.

At least one of the second layer and/or the third layer may be formed by printing a black ink composition.

The display device may comprise an infrared sensor.

According to another aspect of the present disclosure, a method of manufacturing a mirror is presented. The mirror is attachable to a front wall of an air conditioner including a display device and a radar sensor disposed on the front wall. The method includes forming a glass panel, forming a first layer including or comprising or containing silvering e.g. tin on a rear surface of the glass panel, and forming a second layer on a rear surface of the first layer in an area other than an area corresponding or configured to correspond to the display device and/or an area corresponding or configured to correspond to the radar sensor to conceal a rear side of the glass panel.

The method may include forming a third layer or a third layer which is translucent or a translucent third layer on the rear surface of the first layer in the area corresponding to or configured to correspond to the display device.

The method may include, after forming the third layer, forming a fourth layer or fourth layer which is transparent or a transparent fourth layer behind the first layer in the area corresponding to or configured to correspond to the display device and/or the area corresponding to or configured to correspond to the radar sensor.

The method may include, after forming the fourth layer, forming a synthetic resin film on the rear surface of the second layer.

According to yet another aspect, a method of manufacturing an air conditioner is also presented. The air-conditioner may be same as described hereinabove. The mirror may be manufactured as described hereinabove and may be attached to the front wall of the case of the air conditioner.

The details of other embodiments will be included in the detailed description and the drawings below.

### BRIEF DESCRIPTION OF THE DRAWINGS

The above and other objects, features, and other advantages of the present disclosure will be more clearly understood from the following detailed description taken in conjunction with the accompanying drawings, in which:
FIG. 1 is a side view of an air conditioner according to an embodiment of the present disclosure;
FIG. 2 is an exploded perspective view of the air conditioner according to the embodiment of the present disclosure;
FIG. 3 is a cross-sectional view taken along line A-A' in FIG. 2; and
FIG. 4 is a flowchart showing a method of manufacturing a mirror attachable to the air conditioner according to an embodiment of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

Hereinafter, embodiments of the present disclosure will be described in detail with reference to the accompanying drawings. A detailed description of related known technology will be omitted where it is determined that the same would obscure the subject matter of embodiments of the present disclosure. Further, the accompanying drawings are provided to aid in understanding of embodiments of the present disclosure, rather than to limit the scope of the present disclosure. Thus, it is to be understood that the present disclosure covers all modifications, equivalents, and alternatives falling within the scope of the present disclosure.

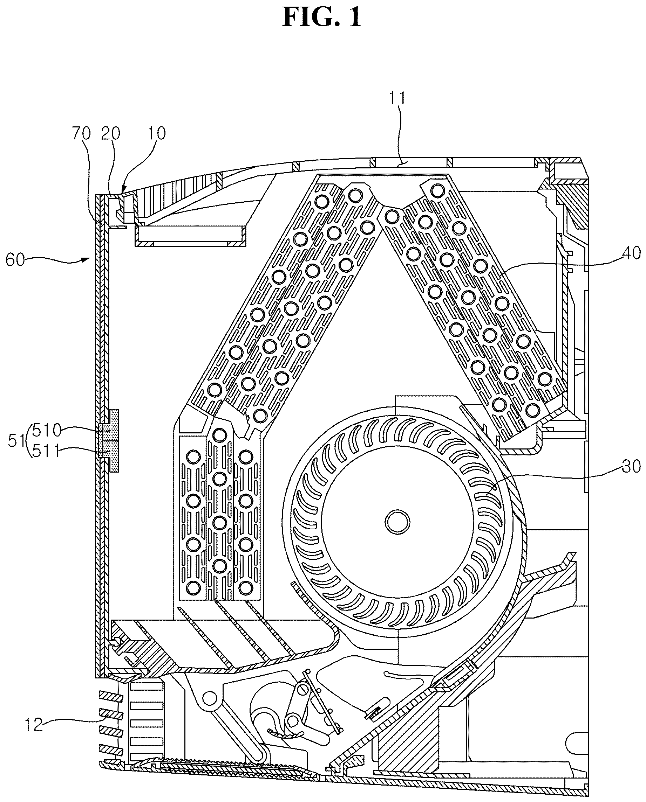

An air conditioner according to an embodiment of the present disclosure will be described with reference to FIG. 1. In the present disclosure the direction may be understood from a user's/occupant's or the indoor space's perspective, facing the air conditioner in its installed state. For example, part of the air conditioner (in its installed state) facing the indoor space or a user or an occupant (in the indoor space) is a front part or front or front surface of the air conditioner and represents front or forward direction, and part of the air conditioner facing away from the indoor space or the user or the occupant (in the indoor space) is a rear part or rear or rear surface of the air conditioner and represents rear or rearward direction. The horizontal/lateral direction (perpendicular to the front-rear direction) may be understood as a side or sides or left and right sides of the of the air conditioner. Similarly, the perpendicular/vertical direction (perpendicular to the front-rear direction and/or the lateral direction) may be understood as a upper-lower sides or top-bottom of the air conditioner. The terms 'rear/front/side/upper/lower, etc.' or 'rear/front/side/upper/lower' surface/side/wall/part of a component or components of the air conditioner may be interpreted according to the front-rear direction, lateral direction and/or vertical direction explained hereinabove.

The air conditioner of the present disclosure includes a case 10 forming the external appearance thereof and includes a suction port 11 and a discharge port 12 formed in the case 10. In the embodiment, the suction port 11 is formed in an upper wall of the case 10, and the discharge port 12 is formed in a lower side of a front wall 20, which will be described later. Alternatively, unlike the above configuration, the suction port 11 and the discharge port 12 may be formed in other portions of the case 10.

A blower fan 30 is mounted in a space defined in the case 10. The blower fan 30 suctions air into the case 10 through the suction port 11, and then discharges the air outside the case 10 through the discharge port 12. A heat exchanger 40 configured to allow the air suctioned into the case 10 to exchange heat with refrigerant is mounted in the case 10. The blower fan 30 may be disposed between the suction port 11 and the discharge port 12, and the heat exchanger 40 may be disposed above the blower fan 30.

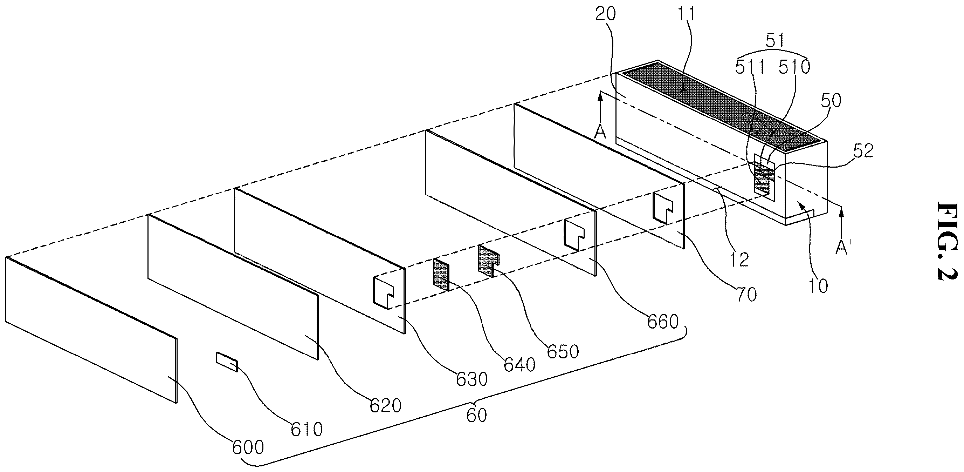

The case 10 include a front wall 20 disposed at a front side thereof, and a display device 51 and a radar sensor 52 (refer to FIG. 2) are disposed at i.e. on or in the front wall 20. For example, the display device 51 and/or the radar sensor 52 may be disposed/accommodated in a groove or indentation opening defined in a front surface of the front wall, or disposed/accommodated in a through-hole or opening defined in the front wall. The display device 51 and/or the radar sensor 52 may be exposed towards a front or outside of the front wall 20/the case 10.

An opening 50 (refer to FIG. 2) may be formed in the front wall 20, and the display device 51 and the radar sensor 52 (refer to FIG. 2) may be disposed in the opening 50 (refer to FIG. 2).

The display device 51 may include a display 510 and an infrared sensor 511. The display 510 may display operational information or information about operation mode about the air conditioner, e.g. the temperature of indoor air, a desired temperature, a current operational state such as cooling mode, standby mode, etc.

The infrared sensor 511 may receive signals from a remote control that adjusts the operation mode of the air conditioner, a desired temperature, a blower speed, an operation time, etc. Information corresponding to the signal received by the infrared sensor 511 may be displayed on the display 510. The display 510 may be a digital display e.g. a light emitting diode (LED) display.

In the embodiment, the infrared sensor 511 is provided separately from the display 510 and is disposed below the display 510. Alternatively, unlike the above configuration, the infrared sensor 511 may be disposed at any other position. Alternatively, the infrared sensor 511 may be coupled to the display 510 so as to be integrated with the display 510.

The radar sensor 52 (refer to FIG. 2) may detect biosignals in or from the indoor space. The biosignals may include the location of an occupant or locations of occupants, number of occupants, an amount of activity of the occupant(s), movement of the occupant(s), the body temperature of the occupant(s), etc. The air conditioner may control the air discharge direction and/or the blower speed in response to the detected biosignals. In the embodiment, the radar sensor 52 is disposed on one side of the display device 51. Alternatively, unlike the above configuration, the radar sensor 52 may be disposed at any other position.

A mirror 60 is disposed in front of the front wall 20. The mirror 60 may be aligned with the display device 51 and/or the radar sensor 52. The mirror 60 may be in direct contact with the front wall or may be adhered to the front wall (i.e. without another intervening components or gap except the adhesion mechanism such as an adhesive material/layer/component 70). A shape and/or size/area of the mirror 60 may correspond to or be same as a shape and/or size/area of the front wall 20. However, the shape and/or size/area of the mirror 60 may not correspond to or not be same as a shape and/or size/area of the front wall 20, for example the shape and/or size/area of the mirror 60 may be smaller than the shape and/or size/area of the front wall 20, and larger than the shape and/or size/area of the display device 51 and/or the radar sensor 52. The mirror 60 may cover or overlap (in front-rear direction) the display device 51 and/or the radar sensor 52.

An adhesive material 70 having an adhesive applied to both surfaces thereof may be interposed between the front wall 20 and the mirror 60, such as double-sided adhesive tape, or alternatively simply an adhesive may be formed as a layer interposed between the front wall 20 and the mirror 60. Thus, the mirror 60 may be attached to the front wall 20 by means of the adhesive material 70 or adhesive. The adhesive material 70 or adhesive may be formed in an area other than the area corresponding to the display device 51 and the area corresponding to the radar sensor 52. As stated above instead of the adhesive material 70, an adhesive may be directly applied to the front wall 20 in order to attach the mirror 60 to the front wall 20.

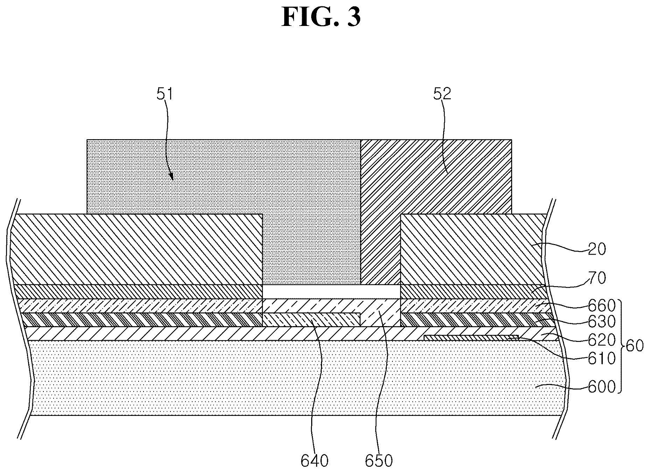

The air conditioner according to the embodiment of the present disclosure will be described in more detail with reference to FIGs. 2 and 3.

The mirror 60 includes a glass panel 600. The glass panel 600 may be made of semi-tempered glass. The glass panel 600 may be made of low-iron glass. The glass panel 600 may be formed to a predetermined size so as to be attached to the front wall 20. The glass panel 600 may have a thickness of 2T.

A first layer 620 (may also be referred to as a reflective layer or silvering) comprising or containing tin is formed on a rear surface of the glass panel 600. The first layer may be generally understood as a reflective layer or silvering layer or silvering (i.e. a coating or layer of a reflective substance or material - for example deposited by a chemical process - on the rear surface of the glass panel 600 - to make the glass panel 600 act like a mirror or reflector i.e. to make the glass panel and the first layer into a reflector with respect to light or electromagnetic radiations. The reflective substance may be tin, as mentioned earlier as an example of the silvering layer or silvering. The tin may have a purity of 99.99% or higher. The first layer may be understood as a tin layer. The first layer 620 may have a light transmittance of 14% to 18%. The first layer 620 may be formed (or disposed or attached or applied or adhered) on the rear surface of the glass panel 600, so that a reflection effect is provided when the mirror 60 is viewed from the front. A shape and/or size/area of the first layer may correspond to or be same as a shape and/or size/area of the glass panel 600.

The first layer 620 may transmit therethrough electromagnetic waves including visible light, i.e. may allow transmission through a material of the first layer without requiring any opening or hole in the first layer. The first layer 620 may transmit therethrough a signal emitted from the radar sensor 52 and/or a signal reflected from an occupant through interaction with the occupant. Light emitted from the display 510 may pass through the first layer 620, so that the occupant views the display 510. The signal emitted from the remote control may pass through the first layer 620 and may reach the infrared sensor 511. At least an area of the first layer corresponding to the display device 51 and/or the radar sensor 52 may be solid, i.e. without any through holes in the area of the first layer corresponding to the display device 51 and/or the radar sensor 52. Alternatively, the (entire) first layer may be a solid layer or a layer without any through holes.

A second layer 630 is formed (or disposed or attached or applied or adhered) on a rear surface of the first layer 620 in an area other than the area corresponding to the display device 51 and/or the area corresponding to the radar sensor 52. The second layer 630 may serve to conceal the rear side of the glass panel 600. The second layer 630 may be formed on the rear surface of the first layer 620 and may have a through-hole or opening or cut-out (in the second layer 630) corresponding to the display device 51 and/or to the radar sensor 52. A shape and/or a size/area of the through-hole or opening or cut-out (in the second layer 630) may be same as a shape and/or a size/area of the display device 51 and/or of the radar sensor 52.

The second layer may be non-transparent or opaque. The second layer may be formed of any suitable material. Light traveling from behind the mirror 60 may be blocked by the second layer 630. Thus, objects behind the mirror 60 may be invisible to the user, and the reflection effect of the mirror 60 may be increased. The second layer 630 may be formed by printing or depositing a black ink composition. A shape and/or size/area of the second layer may correspond to or be same as a shape and/or size/area of first layer and/or of the glass panel 600.

A third layer 640, which is translucent, may be formed (or disposed or attached or applied or adhered) on the rear surface of the first layer 620 in the area corresponding to the display device 51. Alternatively, the third layer 640, which is translucent, may be formed on the rear surface of the first layer 620 only in the area corresponding to the display device 51. The third layer 640 may be formed or deposited by screen-printing a black ink composition. The third layer 640 may have a light transmittance of 60% to 70%. A shape and/or size/area of the third layer 640 may correspond to or be same as a shape and/or size/area of (only) a part of the cut-out or through-hole or opening of the second layer 630, and/or may correspond to or be same as a shape and/or size/area of the display device 51 (i.e. correspondence to the display device 51, herein and in other parts of the disclosure may mean corresponding to the display 510 and/or the infrared sensor 511).

Light emitted from the display 510 may pass through the third layer 640, so that the user views the display 510. Because infrared light passes through the third layer 640, an infrared signal may reach the infrared sensor 511. The third layer 640 may block (only) a portion of light traveling behind the third layer 640, thereby providing uniform mirror reflectivity together with the area in which the second layer 630 is formed.

A fourth layer 650 may be formed (or disposed or attached or applied or adhered) behind or on a rear surface or at a rear of the first layer 620 in an area in which the second layer 630 is not formed. The fourth layer 650 serves to protect the display device 51 and the radar sensor 52. The fourth layer 650 may be formed by printing a transparent ink. The fourth layer 650 may correspond to the cut-out or through-hole or opening of the second layer 630. A shape and/or size/area of the fourth layer 650 may correspond to or be same as a shape and/or size/area of the cut-out or through-hole or opening of the second layer 630, and/or may correspond to or be same as a shape and/or size/area of the display device 51 and/or the radar sensor 52.

The fourth layer may be transparent or formed of a transparent material. Visible light may pass through the fourth layer 650, so that the user views the display 510. Because infrared light passes through the fourth layer 650, an infrared signal may reach the infrared sensor 511. Electromagnetic waves of the radar sensor 52 may pass through the fourth layer 650 and may interact with the occupant, and the electromagnetic waves reflected by the occupant may pass through the fourth layer 650.

A synthetic resin film 660 may be formed (or disposed or attached or applied or adhered) on the rear surface of the second layer 630. The synthetic resin film 660 may be made of polyethylene terephthalate (PET). The synthetic resin film 660 may be opaque, and preferably black. Because the synthetic resin film 660 is formed at the rear side of the mirror 60, it is possible to prevent fragments from scattering when the mirror 60 is ruptured. The synthetic resin film 660 may be formed on the rear surface of the second layer 630 and may have a through-hole or opening or cut-out (in the second layer 630) corresponding to the display device 51 and/or to the radar sensor 52. A shape and/or a size/area of the through-hole or opening or cut-out in the second layer 630 may be same as a shape and/or a size/area of the display device 51 and/or of the radar sensor 52, and/or a shape and/or a size/area of the through-hole or opening or cut-out in the synthetic resin film 660. The shape and/or size/area of the synthetic resin film 660 may correspond to or be same as be shape and/or size/area of the second layer 630. The shape and/or size/area of the through-hole or opening or cut-out in the synthetic resin film 660 may correspond to or may be same as the shape and/or size/area of the fourth layer 650. The shape and/or size/area of the third layer 640 may correspond to or may be same as (only) a part of the through-hole or opening or cut-out in the synthetic resin film 660.A fifth layer 610 may be formed (or disposed or attached or applied or adhered) between the glass panel 600 and the first layer 620. The fifth layer 610 may be formed or deposited by printing an ink composition. The fifth layer 610 may be formed on the rear surface of the glass panel 600 in an area other than the area corresponding to the display device 51 and/or the area corresponding to the radar sensor 52. The fifth layer 610 may include a pattern such as a logo, a trademark, or a decorative pattern in order to provide information, aesthetics, etc. to the user.

The third layer 640 and/or the fourth layer 650 may be disposed in the cut-out or through-hole or opening of the second layer 630 and/or of the synthetic resin film 660. The third layer 640 may be flush with the fourth layer 650 and/or may have a shape/size/thickness complementary to a shape/size/thickness the fourth layer 650. The third layer 640 and the fourth layer 650 may be arranged (for example in a vertical cross-sectional view such as shown in FIG. 3) to have a total thickness (measured in front-rear direction) same as a total thickness of the second layer 630 and the synthetic resin film 660 (measured in front-rear direction). The third layer 640 may have (for example in the vertical cross-sectional view such as shown in FIG. 3) a thickness (measured in front-rear direction) same as a thickness of the second layer 630 (measured in front-rear direction). The fourth layer 650 may have two parts (for example in the vertical cross-sectional view such as shown in FIG. 3) - a first part having a thickness (measured in front-rear direction) same as a thickness of the synthetic resin film 660 (measured in front-rear direction), and a second part having a thickness (measured in front-rear direction) same as a total thickness of the second layer 630 and the synthetic resin film 660 (measured in front-rear direction). The fifth layer 610 may be embedded in the first layer 620 and/or may be in contact with the rear surface of the glass panel 600. Although, FIG 3 shows all of the above conditions together - the air conditioner of the present techniques may include only one or multiple or all of the above conditions.

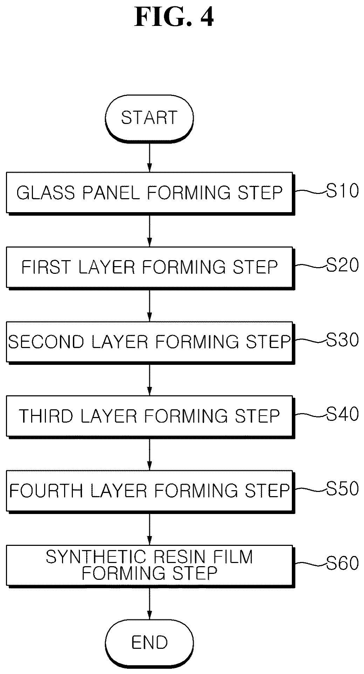

A method of manufacturing the mirror attachable to the air conditioner according to an embodiment of the present disclosure will be described with reference to FIG. 4. The mirror may be same as the mirror 60 discussed hereinabove.

The present disclosure relates to a method of manufacturing the mirror 60 that is attached to the front wall 20 of the air conditioner, on which the display device 51 and the radar sensor 52 are disposed. First, step S10 of forming the glass panel 600 is performed.

Thereafter, step S20 of forming the first layer 620 including or containing tin on the rear surface of the glass panel 600 is performed. The first layer 620 may be formed of tin having a purity of 99.99% or higher. The first layer 620 may have a light transmittance of 14% to 18%.

Thereafter, step S30 of forming the second layer 630, which conceals the rear side of the glass panel 600, on the rear surface of the first layer 620 in an area other than the area corresponding to the display device 51 and the area corresponding to the radar sensor 52 is performed.

Step S40 of forming the third layer 640, which is translucent, on the rear surface of the first layer 620 in the area corresponding to the display device 51 may be performed. The second layer 630 and/or the third layer 640 may be formed by printing a black ink composition. The third layer 640 may have a light transmittance of 60% to 70%.

After the third layer 640 is formed, step S50 of forming the fourth layer 650, which is transparent, behind the first layer 620 in the area corresponding to the display device 51 and the area corresponding to the radar sensor 52 may be performed.

After the fourth layer 650 is formed, step S60 of forming the synthetic resin film 660 on the rear surface of the second layer 630 may be performed.

In the embodiment, step S60 of forming the synthetic resin film 660 is described as being performed after step S50 of forming the fourth layer 650. Alternatively, unlike the above configuration, step S60 of forming the synthetic resin film 660 may be performed after step S40 of forming the third layer 640 and before step S50 of forming the fourth layer 650. Alternatively, step S60 of forming the synthetic resin film 660 may be performed after step S30 of forming the second layer 630 and before step S40 of forming the third layer 640.

Since the other configurations are identical to those of the first or previous embodiment, a further description thereof will be omitted.

A method of manufacturing an air conditioner is also presented. The air-conditioner may be same as described hereinabove. The mirror may be manufactured as described hereinabove and may be attached to the front wall 20 of the case 10 of the air conditioner.

As is apparent from the above description, the air conditioner according to the present disclosure has one or more of the following effects.

Because the first layer having light transmittance is formed behind the glass panel, the radar sensor and the display device shielded by the mirror may operate smoothly.

In addition, due to the first and second layers formed behind the glass panel, the front surface of the case and the internal components are made invisible, and a reflection effect achieving a soft glow is exhibited, thereby improving the aesthetics of the air conditioner.

In addition, because the translucent third layer is formed in the area corresponding to the display device, the screen of the display located behind the mirror is made visible, and the reflectivity of the mirror in the area in which the second layer is not formed is increased. Accordingly, the overall reflectivity of the mirror may be uniform.

In addition, due to the fourth layer protecting the display device and the radar sensor, it is possible to prevent the display device and the radar sensor from being stained or contaminated while ensuring smooth operation thereof.

In addition, because the fifth layer including a logo, a trademark, or a decorative pattern is formed between the glass panel and the first layer, more pieces of information may be provided to the user, or the aesthetics of the product may be improved.

The effects achievable through the disclosure are not limited to the above-mentioned effects, and other effects not mentioned herein will be clearly understood by those skilled in the art from the description of the claims.

Although the present disclosure has been described with reference to specific embodiments shown in the drawings, it is apparent to those skilled in the art that the present disclosure is not limited to those exemplary embodiments and is embodied in many forms without departing from the scope of the present disclosure, which is described in the following claims. These modifications should not be individually understood from the technical spirit or scope of the present disclosure.

## Claims

1. An air conditioner comprising:
a case (10) comprising a front wall (20), the case (10) having a suction port (11) and a discharge port (12) formed therein;
a display device (51) and a radar sensor (52) disposed at the front wall (20); and
a mirror (60) disposed in front of the front wall (20) and in front of the display device (51) and the radar sensor (52);
wherein the mirror (60) comprises:
a glass panel (600);
a first layer (620) formed on a rear surface of the glass panel (600) and comprising a reflective material, wherein the first layer is formed in front of display device (51) and the radar sensor (52); and
a second layer (630) formed on a rear surface of the first layer (620), wherein the second layer (630) comprises an opening formed therein corresponding to the display device (51) and to the radar sensor (52).

2. The air conditioner of claim 1, wherein the first layer (620) is configured to at least partially allow an emission from the display device (51) and/or from the radar sensor (52) to pass therethrough, and
the second layer (630) is less transmissive to the emission from the display device (6) and/or the radar sensor than the first layer (620), and is preferably formed by printing a black ink composition on the rear surface of the first layer (620); and
the opening of the second layer (630) is aligned with the display device (51) and/or the radar sensor (52) for the emission from the display device (51) and/or the radar sensor to pass therethrough.

3. The air conditioner according to claim 1 or 2, wherein the front wall (20) has an opening (50) or accommodation space formed therein, and
wherein the display device (51) and the radar sensor (52) are disposed in the opening (50) or accommodated in the accommodation space.

4. The air conditioner according to any one of the preceding claims, wherein the mirror (60) comprises a third layer (640) formed on the rear surface of the first layer (620) in the area corresponding to the display device (51), the third layer (640) being translucent, preferably the third layer (640) is formed by printing a black ink composition.

5. The air conditioner according to any one of the preceding claims, wherein the mirror (60) comprises a fourth layer (650) formed behind the first layer (620), wherein the fourth layer is aligned with the opening of the second layer (630) and is formed in front of the display device (51) and the radar sensor (52) to protect the display device (51) and the radar sensor (52).

6. The air conditioner according to any one of the preceding claims, wherein the mirror (60) comprises a synthetic resin film (660) formed on a rear surface of the second layer (630); and/or
wherein the mirror (60) comprises a fifth layer (610) formed between the glass panel (600) and the first layer (620).

7. The air conditioner according to any one of the preceding claims, wherein the reflective material is tin, preferably having a purity of 99.99% or higher, and/or
wherein the first layer (620) has a light transmittance of 14% to 18%.

8. The air conditioner according to any one of the preceding claims 1, wherein the display device (51) comprises an infrared sensor (511), and/or wherein the mirror (60) is attached to the front wall by an adhesive layer (70).

9. A method of manufacturing a mirror (60) for attaching to a front wall (20) of an air conditioner comprising a display device (51) and a radar sensor (52) disposed at the front wall (20), the method comprising:
forming (S10) a glass panel (600);
forming (S20) a first layer (620) comprising a reflective material on a rear surface of the glass panel (600); and
forming (S30) a second layer (630) on a rear surface of the first layer (620), wherein the second layer is formed with an opening configured to correspond to the display device (51) and to the radar sensor (52).

10. The method according to claim 9, wherein the reflective material is tin having a purity of 99.99% or higher, and/or
wherein the first layer (620) is formed to have a light transmittance of 14% to 18%.

11. The method according to claim 9 or 10, comprising forming (S40) a translucent third layer (640) on the rear surface of the first layer (620) in the area configured to correspond to the display device (51).

12. The method according to claim 11, wherein at least one of the second layer (630) or the third layer (640) is formed by printing a black ink composition.

13. The method according to claim 11 or 12, comprising, after forming the third layer (640), forming (S50) a transparent fourth layer (650) behind the first layer (620) in the area corresponding to the display device (51) and the area corresponding to the radar sensor (52).

14. The method according to claim 13, comprising, after forming the fourth layer (650), forming (S60) a synthetic resin film (660) on a rear surface of the second layer (630).

15. A method of manufacturing an air conditioner according to any one of claims 1 to 8, the method comprising:
manufacturing the mirror (60) according to any one claims 9 to 14, and
attaching the mirror (60) to the front wall of the case of the air conditioner.
